(19) Europäisches Patentamt

European Patent Office

Office européen des brevets

(11) EP 0 961 757 B1

(12) EUROPÄISCHE PATENTSCHRIFT

(45) Veröffentlichungstag und Bekanntmachung des Hinweises auf die Patenterteilung:
17.10.2001 Patentblatt 2001/42

(21) Anmeldenummer: 98901956.7

(22) Anmeldetag: 10.01.1998

(51) Int Cl.⁷: $C02F\ 1/00$, C02F 1/70, B01J 23/42

(86) Internationale Anmeldenummer:
PCT/EP98/00112

(87) Internationale Veröffentlichungsnummer:
WO 98/37024 (27.08.1998 Gazette 1998/34)

(54) **VERFAHREN ZUR ENTFERNUNG VON CHLORATIONEN AUS LÖSUNGEN**

METHOD FOR REMOVING CHLORATE IONS FROM SOLUTIONS

PROCEDE D'ELIMINATION DES IONS CHLORATE DANS DES SOLUTIONS

(84) Benannte Vertragsstaaten:
BE DE ES FR GB IT NL SE

(30) Priorität: 20.02.1997 DE 19706590
29.10.1997 DE 19747673

(43) Veröffentlichungstag der Anmeldung:
08.12.1999 Patentblatt 1999/49

(73) Patentinhaber: Solvay Deutschland GmbH
D-30173 Hannover (DE)

(72) Erfinder:
• VAN SANTEN, Rutger
NL-1817 HX Alkmaar (NL)
• KLESING, Armin
D-21335 Lüneburg (DE)
• NEUENFELDT, Gerhard
D-31629 Estorf (DE)
• OTTMANN, Alfred
D-30627 Hannover (DE)

(74) Vertreter: Lauer, Dieter, Dr.
Solvay Pharmaceuticals GmbH,
Hans-Böckler-Allee 20
30173 Hannover (DE)

(56) Entgegenhaltungen:
WO-A-96/07617       US-A- 5 531 901

• Patent Abstracts of Japan, abstract of JP-62 98680A (TOKUYAMA SODA CO LTD) 251094 -
• PATENT ABSTRACTS OF JAPAN ABSTRACT OF JP 63-43983 A (KURITA WATER IND LTD) 201294

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Verfahren zur Entfernung von Chlorationen aus Lösungen, durch katalytische Behandlung an einem Edelmetallkatalysator in Gegenwart von Wasserstoff.

Aus WO 96/07617 ist bekannt, daß Halogensauerstoffverbindungen, die als Nebenprodukte der oxidativen Wasseraufbereitung gebildet werden und in geringen Konzentrationen im Wasser enthalten sind, durch katalytische Behandlung an einem Edelmetallkatalysator in Gegenwart von Wasserstoff entfernt werden können.

Als Katalysator wird hier Palladium auf einem oxidischen Träger verwendet, wobei die Porosität und Abriebfestigkeit das Auswahlkriterium für das Trägermaterial sind.

Die JP-PS 63-514 beschreibt ein Verfahren zur Verminderung der Anreicherung von Chlorationen in Salzlösungen der Chloralkalielektrolyse, indem die zirkulierende Salzlösung in Gegenwart von Wasserstoff über eine Katalysator-Schicht geleitet wird.

Als Katalysator werden Metalle oder Metalloxide der 8. Nebengruppe des PSE verwendet.

Aussagen über den Einfluß des Trägermaterials auf die katalytische Wirksamkeit der Metalle können dieser Schrift nicht entnommen werden.

Die Aufgabe der Erfindung besteht darin, ein katalytisches Verfahren zur Entfernung von Chlorationen aus Lösungen, die anionische Coadsorbenzien enthalten, unter Verwendung eines modifizierten Edelmetallkatalysators bereitzustellen.

Es wurde gefunden, daß zur Entfernung von Chlorationen aus Lösungen, die außerdem noch Coadsorbenzien enthalten, sowohl die Art der katalytischen Aktivkomponente als auch das Trägermaterial bedeutsam sind, wobei durch gezielte Wahl des Trägermaterials in Abhängigkeit von der Menge, der in der zu behandelnden Lösung enthaltenen Coadsorbenzien, dies umfaßt ebenfalls die pH-Abhängigkeit, die Effektivität des Verfahrens vom gewählten Trägermaterial beeinflußt werden kann.

Erfindungsgemäß wird die Lösung, die neben den zu entfernenden Chlorationen anionische Coadsorbenzien enthält, in Gegenwart von Wasserstoff an einem geträgerten Rhodium- und/ oder Platinkatalysator, behandelt. Dabei erfolgt der katalytische Abbau des Chlorats zu Chlorid gemäß der Gleichung:

$$ClO_3^- + 3H_2 \rightarrow Cl^- + 3H_2O$$

Die Reaktionsgeschwindigkeit hängt sowohl von der Menge des zur Verfügung stehenden Wasserstoffgases, der Temperatur, dem pH-Wert, der Art des Katalysators als auch von dem Trägermaterial ab.

Als Trägermaterial im Sinne der Erfindung sind anorganische Materialien zu verstehen, die sowohl oxidisch als auch nichtoxidisch sein können, z. B. $ZrO_2$, SiC, Aktivkohle.

Es ist ebenfalls im Sinne der Erfindung, die Oberfläche des anorganischen Trägermaterials gegebenenfalls zu modifizieren, z. B. durch Silylierung, Fluorierung, Reduktion oder Oxidation.

Bei der Wahl des Trägermaterials ist zu beachten, daß die Porosität des Trägermaterials kein Auswahlkriterium ist.

Überraschenderweise wurde gefunden, daß das Trägermaterial eine bestimmte effektive Elektronegativität aufweisen muß. Weiterhin muß das Trägermaterial gut benetzbar sein.

Als Coadsorbenzien im Sinne der Erfindung sind z. B. Chloride, Bromide, Hydroxide, Sulfate und Phosphate zu verstehen, wobei diese Aufzählung keine Einschränkung sein soll.

Als Lösungen im Sinne der Erfindung sind chlorathaltige Abwässer, Prozeßwässer und Salzlösungen der Chloralkali-Elektrolyse zu verstehen, hierbei bestehen keine Einschränkungen bezüglich der abbaubaren Chloratkonzentrationen.

Erfindungsgemäß wird die Lösung bei einem pH-Wert von 1 bis 10, vorzugsweise 1 bis 6, und/oder einer Temperatur <100 °C, vorzugsweise 40 bis 90 °C und/oder einem Druck von 1 bis 30 bar, vorzugsweise 2 bis 15 bar über einen geträgerten Rhodium- und/oder Platinkatalysator geführt.

Das Verfahren kann diskontinuierlich oder kontinuierlich durchgeführt werden.

Bei erhöhten Chloratkonzentrationen in der zu behandelnden Lösung (>100 mg/l) ist die Verwendung eines Dreiphasenreaktors zweckmäßig. Dabei wird der benötigte Wasserstoff durch Stoffübergang

$$H_2 \text{ (gasförmig)} \rightarrow H_2 \text{ (gelöst)}$$

für die Reaktion zur Verfügung gestellt.

Es hat sich als vorteilhaft erwiesen, im Dreiphasenreaktor ein Katalysatorfestbett zu verwenden, da hierbei die mechanische Belastung des Katalysators geringer ist als in einem bewegten Katalysatorbett, der Katalysatorabrieb wird somit minimiert. Dies ist auch aus ökonomischer Sicht bei Verwendung eines Edelmetallkatalysators wichtig. Ein geeigneter Dreiphasenreaktor mit Katalysatorfestbett ist z. B. ein Trickle-Bett-Reaktor.

Es wurde überraschend gefunden, daß die chemische Reaktion bei der Chloratzerstörung nicht durch die Dissoziation sondern bei Chloratkonzentrationen im Spurenbereich (ppm) durch die Adsorption des Chlorates limitiert wird. Bei hohen Konzentrationen wird die Reaktion durch die Desorption der Reaktionsprodukte limitiert.

Bei der Auswahl der katalytischen Aktivkomponente wurde gefunden, daß ein Katalysator der Rhodium und/ oder eine Rhodiumverbindung enthält, für die Chloratreduktion besonders geeignet ist.

Beim Vergleich verschiedener Edelmetallkatalysatoren (gleiches Trägermaterial, gleicher Metallgehalt in Massen %) ergibt sich die folgende Aktivitätsreihenfolge:

$$Rh > Pt > Pd.$$

Es ist aus Journal of Catalysis, 136, pp 161 - 169, 1992 bekannt, daß der Einfluß eines oxidischen Trägermaterials auf eine katalytische Reaktion in der Gasphase (CO-Hydrierung auf geträgertem Ru-Katalysator) mit einer effektiven Elektronegativität (EN) des Trägermaterials nach dem Sanderson-Konzept korreliert werden kann.

Tabelle 1:

| Effektive Elektronegativität von Trägermaterialien (geometrisches Mittel der Allred und Rochow Atom-Elektronegativitäten | |
|---|---|
| **Trägermaterial** | **EN** |
| SiC | 2,06 |
| $ZrO_2$ | 2,45 |
| $Al_2O_3$ | 2,49 |
| Aktivkohle | 2,5 |
| Graphit | 2,5 |

Eine einfache Übertragung dieses Konzeptes auf Reaktionen in wäßriger Phase ist so nicht möglich, da die Ionizität und die Benetzbarkeit des Trägermaterials berücksichtigt werden müssen.

Es wurde gefunden, daß für das erfindungsgemäße Verfahren zur katalytischen Chloratreduktion, die Aktivität des Systems Rh/Träger mit abnehmender effektiver Elektronegativität des Trägermaterials zunimmt, wenn geringe Mengen an Coadsorbenzien vorliegen. Mit zunehmender effektiven Elektronegativität des Trägermaterials nimmt der inhibierende Einfluß der Coadsorbenzien auf die katalytische Chloratreduktion ab, wobei zusätzlich die Ionizität des Trägermaterials berücksichtigt werden muß. Somit ist bei der Auswahl eines geeigneten Trägermaterials für die katalytische Chloratreduktion die Coadorbenzienkonzentration in der zu behandelnden Lösung entscheidend für die Effektivität des Verfahrens.

Es muß zusätzlich berücksichtigt werden, daß verschiedene anionische Coadsorbenzien sich unterschiedlich stark auf die katalytische Chloratreduktion auswirken: Hydroxidionen haben einen größeren Einfluß als Bromidionen und diese wiederum einen größeren Einfluß als Chloridionen.

Beim Vergleich dieses Einflusses kann also folgende Reihenfolge festgestellt werden

$$OH^- > Br^- > Cl^-.$$

In einer bevorzugten Ausführungsform der Erfindung werden bei Coadsorbenzienkonzentrationen <5 g/l Chlorid Trägermaterialien mit einer effektiven Elektronegativität <2,2 verwendet.

Bei einer Coadsorbenzienkonzentration z. B. >5 g/l Chlorid wird ein Trägermaterial mit einer effektiven Elektronegativität >2,2 verwendet, zusätzlich ist hierbei ein weiteres Kriterium für die Wahl des Trägermaterials der Wert der Differenz der Elektronegativitäten der im Trägermaterial enthaltenen Atome, also die Ionizität des Trägers. Erfindungsgemäß muß er <1 sein, wenn die Coadsorbenzienkonzentration >5 g/l Chlorid ist.

Es wurde weiterhin gefunden, daß, wenn die zu behandelnde Lösung eine Coadsorbenzienmenge <5 g/l Chlorid aufweist, sich als Katalysator mit dem besten Chloratabbauergebnis Rh/SiC erweist. Bei Coadsorbenzienmengen >5 g/l Chlorid erwies sich Rh mit Aktivkohle als Trägermaterial als Katalysator mit den besten Chloratabbauwerten. Erhöhte Temperatur und erhöhter Wasserstoffdruck wirken sich günstig auf die katalytische Chloratreduktion aus.

Es wurde weiterhin gefunden, daß die benötigte Menge des katalytisch aktiven Edelmetalls niedriger ist, als aus dem bekannten Stand der Technik zu erwarten war.

Die erfindungsgemäß eingesetzten Rhodium- und/oder Platinkatalysatoren enthalten 0,01 bis 5 Massen-%, vorzugsweise 0,1 bis 2 Massen-% Rhodium bzw. Platin.

Die Herstellung des Katalysators erfolgt in bekannter Weise z. B. durch Imprägnieren oder Tränken des Trägers mit einer gelösten Rhodiumverbindung oder durch Auffällen einer Rhodiumverbindung auf das Trägermaterial. Je nach Wahl der Präparationsbedingungen ist es möglich, die Metallverbindung so auf das Trägermaterial aufzubringen, daß das Edelmetall nur im äußeren Bereich des Trägermaterials vorliegt (Schalenstruktur). Anschließend wird der Trägerkatalysator getrocknet und in geeigneter Weise getempert. Üblicherweise erfolgt das Tempern bei 200 bis 1.000 °C unter Schutzgas.

Die nachfolgenden Beispiele sollen die Erfindung erläutern jedoch nicht einschränken.

## Beispiel 1:

Die folgenden Katalysatoren wurden in der katalytischen Chloratreduktion verglichen:

1 Massen-% Rh auf Aktivkohlepulver, 0,5 Massen-% Rh auf SiC-Pulver.

In einem Rührreaktor wurden 500 ml Wasser (pH 4, 70 °C, Normaldruck), das 1000 mg/l Chlorationen enthielt, vorgelegt. Der Wasserstoffeintrag wurde auf 6 l/h eingestellt. Die Katalysatorkonzentration war in beiden Fällen je 2 g/l. Beide Katalysatoren hatten vergleichbare Teilchengrößen. Bei Benutzung des Katalysators Rh/Aktivkohle wurde nach einer Reaktionszeit von 1 Stunde in der Reaktionslösung eine Chloridkonzentration von 145 mg/l gemessen. Bei Benutzung des Katalysators Rh/SiC wurde nach einer Reaktionszeit von 1 Stunde in der Reaktionslösung eine Chloridkonzentration von 200 mg/l gemessen.

## Beispiel 2:

Die folgenden Katalysatoren wurden in der katalytischen Chloratreduktion verglichen:

0,5 Massen-% Pt auf SiC-Pulver, 0,5 Massen-% Rh auf SiC-Pulver.

In einem Rührreaktor wurden 500 ml Wasser (pH 4, 70 °C, Normaldruck), das 1000 mg/l Chlorationen enthielt, vorgelegt. Der Wasserstoffeintrag wurde auf 6 l/h eingestellt. Die Katalysatorkonzentration war in beiden Fällen 0,5 g/l. Beide Katalysatoren hatten vergleichbare Teilchengrößen. Bei Benutzung des Katalysators Pt/SiC wurde nach einer Reaktionszeit von 2 Stunden in der Reaktionslösung eine Chloridkonzentration von 100 mg/l gemessen. Bei Benutzung des Katalysators Rh/SiC wurde nach einer Reaktionszeit von 2 Stunden in der Reaktionslösung eine Chloridkonzentration von 150 mg/l gemessen.

## Beispiel 3:

300 g Chloralkali-Elektrolyselösung (210 g/l NaCl; 14 g/l Chlorat) wurden in einem Rührreaktor mit 5 g Katalysator (1 Massen-% Rh auf Aktivkohlepulver) bei 70 °C, pH 4 und bei Normaldruck behandelt (Wasserstoffeintrag: 6 l/h). Dabei konnte die Chloratkonzentration auf einen Wert <0,2 g/l gesenkt werden. Auch bei einem Massenstrom von 100 g/h durch den Reaktor blieb die Chloratkonzentration bei einem Wert <0,5 g/l. Auch nach einer Betriebszeit von 800 Stunden konnte keine Katalysatordesaktivierung festgestellt werden.

## Beispiel 4:

Der Katalysator 0,5 Massen-% Rh auf SiC-Pulver (Katalysatorkonzentration: 0,5 g/l) wurde in einem Rührreaktor benutzt, um Chlorat (Anfangskonzentration 1000 mg/l in einer wäßrigen Lösung bei 50 °C, pH 2 und bei Normaldruck zu reduzieren (Wasserstoffeintrag: 6 l/h). Im Falle einer reinen Lösung, die nur Natriumchlorat enthielt, wurde eine Abnahme der Chloratkonzentration von 1000 mg/l auf 650 mg/l innerhalb von 2 Stunden gemessen. Enthielt die Chloratlösung zusätzlich 210 g/l NaCl wurde unter den gleichen Reaktionsbedingungen nur eine Abnahme der Chloratkonzentration um 100 mg/l festgestellt.

## Beispiel 5:

Der Katalysator 0,5 Massen-% Rh auf $ZrO_2$ (Katalysatorkonzentration: 2 g/l) wurde in einem Rührreaktor benutzt, um Chlorat (Anfangskonzentration 1000 mg/l) in einer wäßrigen Lösung bei 70 °C, pH 4 und bei Normaldruck zu reduzieren. Der Wasserstoffeintrag wurde auf 6 l/h eingestellt. Im Falle einer reinen Lösung, die nur Natriumchlorat enthielt, wurde eine Abnahme der Chloratkonzentration von 1000 mg/l auf 110 mg/l innerhalb von 2 Stunden gemessen.

Enthielt die Chloratlösung zusätzlich 50 g/l NaCl, wurde unter den gleichen Reaktionsbedingungen nur eine Abnahme der Chloratkonzentration auf 450 mg/l festgestellt.

Enthielt die Chloratlösung nicht 50 g/l NaCl sondern 8 g/l NaBr, wurde unter den gleichen Reaktionsbedingungen nur eine Abnahme der Chloratkonzentration auf 730 mg/l festgestellt.

**Beispiel 6:**

Der Katalysator 0,5 Massen-% Rh auf Graphit (Katalysatorkonzentration: 2 g/l) wurde in einem Rührreaktor benutzt, um Chlorat (Anfangskonzentration 1000 mg/l) in einer wäßrigen Lösung bei 50 °C, pH 6 und bei Normaldruck zu reduzieren (Wasserstoffeintrag: 6 l/h). Im Falle einer reinen Lösung, die nur Natriumchlorat enthielt, wurde eine Abnahme der Chloratkonzentration von 1000 mg/l auf 900 mg/l innerhalb von 2 Stunden gemessen.

**Beispiel 7:**

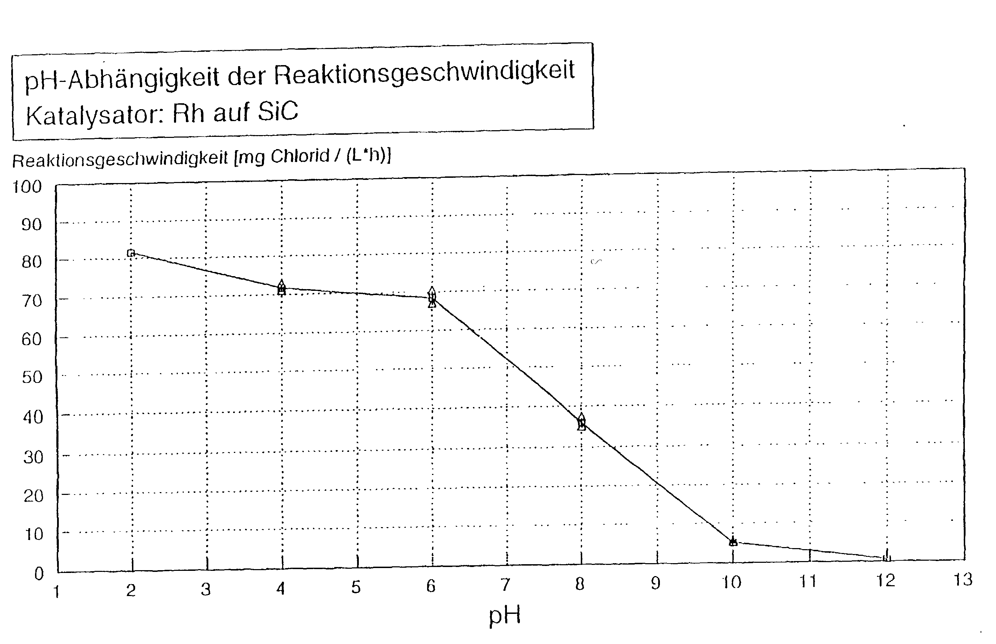

Die Reaktionsgeschwindigkeit der katalytischen Chloratreduktion am Katalysator Rh/SiC wurde in einem Rührreaktor bei 70 °C, einer Katalysatorkonzentration von 0,5 g/L, einem Wasserstoffeintrag von 6 l/h bei verschiedenen pH-Werten gemessen. Als Substrat wurde eine reine $NaClO_3$-Lösung mit einer Anfangschloratkonzentration von 1000 mg/l gewählt. Das Ergebnis ist in Figur 1 zu sehen. Man erkennt eine starke pH-Abhängigkeit der Reaktion, die im sauren Bereich am schnellsten verläuft.

**Beispiel 8:**

In einem Tickle-Bed-Reaktor wurde eine Salzlösung aus der Chloralkali-Elektrolyse (NaCl: 210 g/l; Chloratgehalt: 17,7 g/l, pH 1,5} bei 50 °C mit Wasserstoff an einem Rh/Aktivkohle-Katalysator umgesetzt. In Abhängigkeit vom Wasserstoffdruck konnte dabei der Chloratgehalt auf folgende Werte abgebaut werden:

| | |
|---|---|
| 1 bar Überdruck $H_2$ | 11,83 g/l |
| 2 bar Überdruck $H_2$ | 7,76 g/l |
| 3 bar Überdruck $H_2$ | 4,15 g/l |
| 4,2 bar Überdruck $H_2$ | 1,35 g/l |
| 4,9 bar Überdruck $H_2$ | 0,62 g/l. |

**Beispiel 9:**

Die Reaktionsgeschwindigkeit der katalytischen Chloratreduktion am Katalysator Rh/Aktivkohle wurde in einem Rührreaktor bei 70 °C, einer Katalysatorkonzentration von 2 g/L, einem Wasserstoffeintrag von 6 l/h bei verschiedenen Rh-Konzentrationen des Katalysators gemessen. Als Substrat wurde eine reine $NaClO_3$-Lösung mit einer Anfangschloratkonzentration von 1000 mg/l gewählt. Es wurden folgende Reaktionsgeschwindigkeiten (Chloridbildung) in Abhängigkeit von der Rh-Konzentration des Katalysators gemessen (bei etwa gleicher Rh-Dispersion):

| | |
|---|---|
| 0,17 Massen-% Rh | 95 mg $Cl^-$/(l*h) |
| 0,41 Massen-% Rh | 105 mg $Cl^-$/(l*h) |
| 0,81 Massen-% Rh | 135 mg $Cl^-$/(l*h) |

Die Reaktionsgeschwindigkeit ist also nur in untergeordnetem Maße von der Rh-Konzentration des Katalysators abhängig.

**Beispiel 10:**

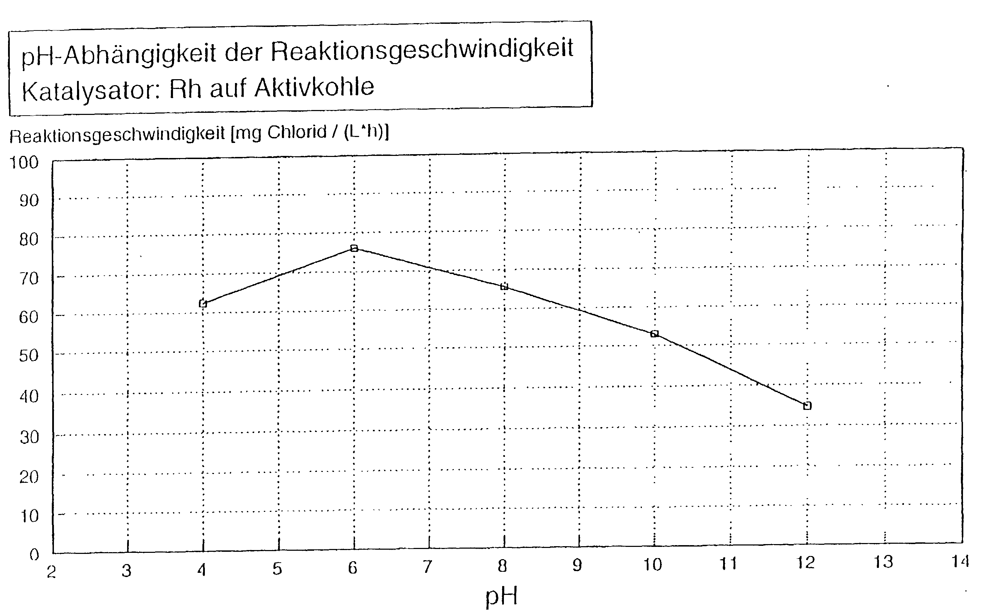

Die Reaktionsgeschwindigkeit der katalytischen Chloratreduktion an Katalysator Rh/Aktivkohle wurde in einem Rührreaktor bei 70 °C, einer Katalysatorkonzentration von 0,5 g/l, einem Wasserstoffeintrag von 6 l/h bei verschiedenen pH-Werten gemessen. Als Substrat wurde eine reine $NaClO_3$-Lösung mit einer Anfangskonzentration von 1000 mg/l gewählt. Das Ergebnis ist in Fig. 2 zu sehen. Man erkennt eine deutlich geringere pH-Abhängigkeit der Reaktion im Vergleich zum Katalysator Rh/SiC (Beispiel 7, Fig. 1).

**Patentansprüche**

1. Verfahren zur Entfernung von Chlorat aus Lösungen, durch katalytische Behandlung an einem Edelmetall-Träger-Katalysator in Gegenwart von Wasserstoff, **dadurch gekennzeichnet, daß** die Lösung, die neben Chlorat anionische Coadsorbenzien enthält, bei einem pH-Wert von 1 bis 10 und/oder einem Druck von 1 bis 30 bar über einen Rhodium- und/oder Platinträgerkatalysator geführt wird, dessen Trägermaterial der jeweiligen Coadsorbenzienkonzentration angepaßt ist, wobei gilt:

   bei einer Coadsorbenzienkonzentration <5 g/l ist die effektive Elektronegativität des Trägermaterials <2,2;

   bei einer Coadsorbenzienkonzentration >5 g/l ist die effektive Elektronegativität des Trägermaterials >2,2, wobei der Wert der Differenz der Elektronegativitäten der im Trägermaterial enthaltenen Atome <1 ist.

2. Verfahren zur Entfernung von Chlorat nach Anspruch 1, **dadurch gekennzeichnet, daß** die Reaktion in einem Dreiphasenreaktor, vorzugsweise in einem Trickle-Bett-Reaktor durchgeführt wird.

3. Verfahren zur Entfernung von Chlorat nach Anspruch 1 und 2, **dadurch gekennzeichnet, daß** die katalytische Umsetzung bei einem pH-Wert von 1 bis 6 und/oder einem Druck von 2 bis 15 bar und/oder bei einer Temperatur von <100 °C, vorzugsweise 40 bis 90 °C, durchgeführt wird.

4. Verfahren zur Entfernung von Chlorat nach Anspruch 1 bis 3, **dadurch gekennzeichnet, daß** als nichtoxidischer Katalysatorträger SiC oder Aktivkohle verwendet wird.

5. Verfahren zur Entfernung von Chlorat nach Anspruch 1 bis 3, **dadurch gekennzeichnet, daß** als oxidischer Katalysatorträger $ZrO_2$ verwendet wird.

6. Verfahren zur Entfernung von Chlorat nach Anspruch 1 bis 4, **dadurch gekennzeichnet, daß** bei einer Coadsorbenzienmenge <5 g/l Chlorid als Katalysator Rhodium auf Siliciumcarbid verwendet wird.

7. Verfahren zur Entfernung von Chlorat nach Anspruch 1 bis 4, **dadurch gekennzeichnet, daß** bei einer Coadsorbenzienmenge >5 g/l Chlorid als Katalysator Rhodium auf Aktivkohle verwendet wird.

8. Verfahren zur Entfernung von Chlorat nach Anspruch 1 bis 7, **dadurch gekennzeichnet, daß** ein Katalysator verwendet wird, der 0,01 bis 5 Massen-%, vorzugsweise 0,1 bis 2 Massen% Edelmetall enthält.

9. Verwendung des Verfahrens nach Anspruch 1 bis 8 zur Entfernung von Chlorationen aus Abwässern, Prozeßwässern oder Salzlösungen der Chloralkalielektrolyse.

**Claims**

1. A method for the removal of chlorate from solutions by catalytic treatment on a precious-metal supported catalyst in the presence of hydrogen, **characterised in that** the solution, which in addition to chlorate contains anionic coadsorbents, is passed over a rhodium and/or platinum supported catalyst, the support material of which is adapted to the respective coadsorbent concentration, at a pH value of 1 to 10 and/or a pressure of 1 to 30 bar, wherein:

   at a coadsorbent concentration of <5 g/l the effective electronegativity of the support material is <2.2;

   at a coadsorbent concentration of >5 g/l the effective electronegativity of the support material is >2.2, the value of the difference in the electronegativities of the atoms contained in the support material being <1.

2. A method for the removal of chlorate according to Claim 1, **characterised in that** the reaction is carried out in a three-phase reactor, preferably in a tricklebed reactor.

3. A method for the removal of chlorate according to Claims 1 and 2, **characterised in that** the catalytic reaction is carried out at a pH value of 1 to 6 and/or a pressure of 2 to 15 bar and/or at a temperature of <100°C, preferably 40 to 90°C.

4. A method for the removal of chlorate according to Claims 1 to 3, **characterised in that** SiC or activated carbon is used as non-oxidic catalyst support.

5. A method for the removal of chlorate according to Claims 1 to 3, **characterised in that** $ZrO_2$ is used as the oxidic catalyst support.

6. A method for the removal of chlorate according to Claims 1 to 4, **characterised in that** for a quantity of coadsorbent of <5 g/l chloride rhodium on silicon carbide is used as catalyst.

7. A method for the removal of chlorate according to Claims 1 to 4, **characterised in that** for a quantity of coadsorbent of >5 g/l chloride rhodium on activated carbon is used as catalyst.

8. A method for the removal of chlorate according to Claims 1 to 7, **characterised in that** a catalyst is used which contains 0.01 to 5 mass %, preferably 0.1 to 2 mass %, precious metal.

9. The use of the method according to Claims 1 to 8 for the removal of chlorate ions from waste water, process water or salt solutions from chlorine-alkali electrolysis.


**Revendications**

1. Procédé d'élimination du chlorate dans des solutions par traitement catalytique au niveau d'un catalyseur métal précieux-support en présence d'hydrogène, **caractérisé en ce que** la solution, qui, outre du chlorate, contient des coadsorbants anioniques, est passée à un pH entre 1 et 10 et/ou une pression entre 1 et 30 bars sur un catalyseur au rhodium et/ou au platine sur support, dont le matériau support est adapté à la concentration en coadsorbants respective, sachant que :

   - pour une concentration en coadsorbants inférieure à 5 g/litre l'électronégativité effective du matériau support est inférieure à 2,2 ; et
   - pour une concentration en coadsorbants supérieure à 5 g/litre, l'électronégativité effective du matériau support est supérieure à 2,2, la valeur de la différence des électronégativités des atomes contenus dans le matériau support étant inférieure à 1.

2. Procédé d'élimination du chlorate selon la revendication 1, **caractérisé en ce que** la réaction est mise en oeuvre dans un réacteur à trois phases, de préférence dans un réacteur gaz-liquide catalytique à lit fixe.

3. Procédé d'élimination du chlorate selon les revendications 1 et 2, **caractérisé en ce que** la réaction catalytique est mise en oeuvre à un pH entre 1 et 6 et/ou à une pression de 2 à 15 bars et/ou à une température inférieure à 100 °C, de préférence comprise entre 40 et 90 °C.

4. Procédé d'élimination du chlorate selon les revendications 1 à 3, **caractérisé en ce que** l'on utilise SiC ou du charbon actif en tant que support de catalyseur non oxydant.

5. Procédé d'élimination du chlorate selon les revendications 1 à 3, **caractérisé en ce que** l'on utilise $ZrO_2$ en tant que support de catalyseur oxydant.

6. Procédé d'élimination du chlorate selon les revendications 1 à 4, **caractérisé en ce que** l'on utilise comme catalyseur, en cas de concentration en coadsorbants inférieure à 5 g/litre de chlorure, du rhodium sur carbure de silicium.

7. Procédé d'élimination du chlorate selon les revendications 1 à 4, **caractérisé en ce que** l'on utilise comme catalyseur, en cas de concentration en coadsorbants supérieure à 5 g/litre de chlorure, du rhodium sur charbon actif.

8. Procédé d'élimination du chlorate selon les revendications 1 à 7, **caractérisé en ce que** l'on utilise un catalyseur qui contient 0,01 à 5 % en masse, de préférence 0,1 à 2 % en masse de métal précieux.

9. Utilisation du procédé d'élimination des ions chlorate selon les revendications 1 à 8 provenant d'eaux usées, d'eaux de traitement industrielles ou des solutions salines d'électrolyse à l'alcali et au chlore.

pH-Abhängigkeit der Reaktionsgeschwindigkeit
Katalysator: Rh auf SiC

Reaktionsgeschwindigkeit [mg Chlorid / (L*h)]

pH

pH-Abhängigkeit der Reaktionsgeschwindigkeit
Katalysator: Rh auf Aktivkohle

Reaktionsgeschwindigkeit [mg Chlorid / (L*h)]

pH

EP 0 961 757 B1